# EUROPÄISCHE PATENTANMELDUNG

(11) **EP 2 617 976 A1**
(43) Veröffentlichungstag der Anmeldung: **24.07.2013**
(21) Anmeldenummer: 12152108.2
(22) Anmeldetag: 23.01.2012
(51) Int. Cl.: F02F 7/00, F02G 5/00

(54) **Nutzung von Abluftwärme aus Wärmekraftmaschinengehäusen**

(71) Anmelder: Siemens Aktiengesellschaft, 80333 München (DE)
(72) Erfinder: Butzeck, Christopher, 45481 Mülheim (DE); Schneider, Oliver, Dr., 46487 Wesel (DE); Schumacher, Karsten, 40625 Düsseldorf (DE); Sternemann, Ansgar, 44579 Castrop-Rauxel (DE); Deiss, Olga, 40627 Düsseldorf (DE); Eickelkamp, Jan, 46149 Oberhausen (DE); Kahlstorf, Uwe, 45478 Mülheim a.d. Ruhr (DE); Link, Marco, 47057 Duisburg (DE); Nehlsen, Dennis, 46562 Voerde (DE); Pfadler, Sebastian, Dr., 45478 Mülheim an der Ruhr (DE); Reckert, Rafael, 13127 Berlin (DE); Savilius, Nicolas, 45359 Essen (DE)

(57) **Zusammenfassung**

Die Erfindung betrifft eine Anordnung (1) sowie ein Verfahren (100) zur Nutzung von Abluft (2) aus einem Wärmekraftmaschinengehäuse (3).

Erfindungsgemäß ist vorgesehen, dass eine Gehäuseabluft (2) aus einem Gehäuse (3) einer Wärmekraftmaschine (4), insbesondere einer Gasturbine, abgeführt (6) und eine in der abgeführten Gehäuseabluft (2) enthaltene thermische Energie auf einen Stoffstrom (8) einer (anderen) technischen Anlage (9) übertragen wird (11).

## Beschreibung

Die Erfindung betrifft eine Anordnung sowie ein Verfahren zur Nutzung von Abluft aus einem Wärmekraftmaschinengehäuse.

Wärmekraftmaschinen, beispielsweise Verbrennungskraftmaschinen, wie, insbesondere kleinere, Verbrennungsmotoren oder wie, insbesondere große, Gasturbinen, oder thermische Fluidenergiemaschinen mit äußerer Verbrennung, wie Dampfturbinen, sind allgemein bekannt.

Eine solche Wärmekraftmaschine ist dabei eine Maschine, die thermische Energie, kurz Wärmeenergie oder auch nur kurz Wärme, in mechanische Energie umwandelt. Sie nutzt dabei das Bestreben der Wärme aus, von Gebieten mit höheren zu solchen mit niedrigeren Temperaturen zu fließen.

Eine Gasturbine(-nanlage) im Speziellen ist eine (groß-)technische Anlage aus einem Verdichter, einer Brennkammer mit meist mehreren Brennern und der eigentlichen Turbine zur Stromerzeugung, deren Komponenten, d. h. hier der Verdichter, die Brennkammer mit den meist mehreren Brennern und die Turbine, in der Regel innerhalb eines Gehäuses angeordnet bzw. eingehaust sind.

Das die Gasturbine(-nanlage) einhausende Gehäuse dient dabei im Wesentlichen einem Schallschutz, bezeichnet dann als Schallschutzeinhausung, wie auch einem Gasschutz, beispielsweise dann auch als Explosionsschutzeinhausung, im Speziellen als Encloser, wie als CO2-Encloser, bezeichnet.

Eine solche Gasturbine(-nanlage) wird mit fluiden Brennstoffen betrieben. In der Regel sind diese Brennstoffe Kohlenwasserstoffe, Alkohole, Kohle- oder Erdgas. Diese Fluide sind der Brennstoff für die Anlage, deren Turbine einen an sie angekoppelten Generator zur Stromerzeugung antreibt.

Dabei saugt zunächst der ebenfalls an die Turbine mechanisch angekoppelte und durch diese angetriebene Verdichter Frischluft für den Verbrennungsprozess an und verdichtet diese auf ein Mehrfaches des ursprünglichen Wertes.

Die komprimierte Luft wird mit dem Brennstoff der Brennkammer zugeführt. Dort wird das Gemisch aus Frischluft und Brennstoff mittels des bzw. der Brenner gezündet, um dann dort zu verbrennen, wobei Verbrennungsgase - im Wesentlichen Kohlendioxid, Wasserdampf, Stickstoff und Sauerstoff - Temperaturen bis ca. 1500°C und höher erreichen.

Die heißen Abgase strömen dann in die Turbine, in der diese einen Teil ihrer Energie durch Entspannung als Bewegungsenergie an die Turbine abgeben.

Durch den an die Turbine gekoppelten Generator wird die mechanische Leistung dann in elektrische Leistung umgewandelt, welche als elektrischer Strom in ein Stromnetz eingespeist wird.

Vom Gasturbinenaustritt werden (kohlendioxidreiche) Abgase bzw. Rauchgase entweder direkt oder mitunter auch über einen Wärmetauscher abgeleitet.

In einer solchen Wärmekraftmaschine, wie beispielsweise in der Gasturbine(-nanlage), fallen durch den Betrieb der Anlage große Wärmemengen an, welche von der Wärmekraftmaschine - beispielsweise in Form von Wärmeströmen gas- oder flüssiger Medien - abgeführt werden müssen.

Diese Wärmeabfuhr geschieht beispielsweise über ein Kühlsystem bzw. Kühlwassersystem der Maschine, über ein Schmierölsystem der Maschine, über das Abgas der technischen Anlage oder auch über sonstige Formen einer freien oder erzwungenen Konvektion bei der technischen Anlage.

Während vor allem auf Grund einer kompakten Bauart bei Verbrennungsmotoren bereits für eine Vielzahl von auftretenden Wärmeströmen eine interne Umverteilung erfolgt und somit die an eine Umgebung des Verbrennungsmotors abgeführte Wärmemenge minimiert wird, bleibt bei großtechnisch eingesetzten Wärmekraftmaschinen, wie die Gasturbinen(-anlagen), ein nicht unerheblicher Teil der abgeführten Wärmemenge ungenutzt.

Auch Wärmeübertrager (auch Wärmetauscher) sind allgemein bekannt.

Solche Wärmeübertrager bzw. Wärmetauscher sind Systeme, welche thermische Energie von einem ersten Stoffstrom auf einen anderen, zweiten Stoffstrom übertragen. Dabei können beide Stoffströme gleichartig oder auch verschiedenartig sein. So ist beispielsweise eine Übertragung von thermischer Energie von einem - wärmeren ersten - Gasstrom auf einen - kälteren, zweiten - Flüssigkeitsstrom, von einem - wärmeren ersten - Gasstrom auf einen - kälteren, zweiten - Gastrom oder auch von einem - wärmeren ersten - Flüssigkeitsstrom auf einen - kälteren, zweiten - Flüssigkeitsstrom möglich.

Wärmeübertrager sind in eine dreigegliederte Klassifizierung der thermischen Vorgänge hinsichtlich der Wärmeübertragung gliederbar.

Eine direkte (offene) Wärmeübertragung beruht auf einem Vorgang einer kombinierten Wärme- und Stoffübertragung bei Stoffströmen.

Eine indirekte (geschlossene) Wärmeübertragung ist dadurch gekennzeichnet, dass Stoffströme räumlich durch eine wärmedurchlässige Wand getrennt sind. Wärmeübertrager dieser Klasse sind beispielsweise sogenannte Rekuperatoren.

Eine halbindirekte Wärmeübertragung nutzt die Eigenschaften eines Wärmespeichers. Dabei werden beide Stoffströme zeitversetzt mit einem Wärmespeicher in Kontakt gebracht. Der Wärmespeicher wird abwechselnd durch das heißere Medium erwärmt und danach durch das kältere Medium abgekühlt, um so thermische Energie vom heißeren auf das kältere Medium zu übertragen. Wärmeübertrager dieser Klasse werden Regenerator genannt.

Weiterhin ist eine sogenannte Pinch-Methode bekannt.

Die Pinch-Methode ist eine thermodynamische (Optimierungs-) Methode zum Auffinden eines optimalen Energieversorgungs- bzw. Energiebedarfssystems für einen Prozess bzw. bei einer großtechnischen Anlage. Dabei werden Wärmeströme des Prozesses betrachtet und diese durch Angabe ihrer Anfangs- und Endtemperaturen sowie eines Produktes aus spezifischer Wärme und ihres Massenstromes oder ihrer Verdampfungs-, bzw. Kondensationsleistung, sowie einer Wärmeübergangszahl charakterisiert.

Die Prozessströme werden in einem Temperatur-Energiefluss-Diagramm dargestellt. Wärmeströme, die erwärmt werden sollen, werden dabei als "kalte", Wärmeströme, die abgekühlt werden müssen, als "heiße" Wärmeströme bezeichnet. Die Einzelströme werden zu einer heißen und einer kalten Summenkurve addiert. Diese Summenkurven ("Composite Curves") stellen einen kumulierten Kühlbedarf und einen kumulierten Heizbedarf des Prozesses auf den jeweiligen Temperaturniveaus dar. Sie bilden den Prozess also praktisch als einen einzigen "Superwärmetauscher" ab.

Mittels dieser Pinch-Methode lässt sich so bei einem Wärmeverbundsystem, d. h. bei einem System mit mehreren Wärmeströmen auf unterschiedlichen Temperatur- bzw. Energieniveaus, ein minimierter Gesamtenergiebedarf - und damit ein ökonomisch bzw. ökologisch optimierter Betrieb des Systems ermitteln.

Es liegt der Erfindung die Aufgabe zugrunde, eine ökonomische und ökologische Effizienz von technischen Anlagen zu verbessern.

Die Aufgabe wird durch eine Anordnung und ein Verfahren zur Nutzung von Abluft aus einem Wärmekraftmaschinengehäuse mit den Merkmalen gemäß dem jeweiligen unabhängigen Patentanspruch gelöst.

Bevorzugte Weiterbildungen der Erfindung ergeben sich auch aus den abhängigen Ansprüchen.

Die erfindungsgemäße Anordnung sowie deren Weiterbildungen sind insbesondere für das erfindungsgemäße Verfahren geeignet. Entsprechendes gilt auch in umgekehrter Weise für das erfindungsgemäße Verfahren sowie dessen Weiterbildungen.

Die Anordnung zur Nutzung von Gehäuseabluft aus einem Gehäuse einer Wärmekraftmaschine weist ein eine Wärmekraftmaschine einhausendes Gehäuse, wie eine Schallschutzeinhausung und/oder eine Explosionseinhausung, sowie eine Abführvorrichtung zur Abführung von in dem Gehäuse befindlicher Gehäuseabluft, beispielsweise eine Absauganlage und/oder ein Gebläse, auf.

Weiter gekennzeichnet ist diese Anordnung mit einem Mittel zur Übertragung von thermischer Energie, beispielsweise einem Wärmetauscher, der aus dem Gehäuse abgeführten Gehäuseabluft auf einen Stoffstrom, beispielsweise einen Fluidstrom, insbesondere einen Gasstrom oder einen Flüssigkeitsstrom, einer (anderen) technischen Anlage.

Nach dem Verfahren zur Nutzung von Gehäuseabluft aus einem Gehäuse einer Wärmekraftmaschine wird die Gehäuseabluft aus dem Gehäuse der Wärmekraftmaschine abgeführt. Weiter wird die in der abgeführten Gehäuseabluft enthaltene thermische Energie auf einen Stoffstrom einer (anderen) technischen Anlage übertragen.

Vereinfacht ausgedrückt, die Erfindung nutzt die vom bzw. von innerhalb des Wärmekraftmaschinengehäuses - ursprünglich ungenutzt an die Umgebung - abgegebene Wärmeenergie der Gehäuseabluft gezielt für bzw. bei anderen Prozessen, wie für Heizungen großtechnischer Anlagen oder in externen Wärmeverbundsystemen anderer, an die Wärmekraftmaschine ankoppelbarer (groß-)technischer Anlagen (kurz auch nur "thermische Verschaltung").

Hier erweist sich die Erfindung insbesondere vorteilhaft, wenn eine solche, ankoppelbare bzw. verschaltbare (groß-) technische Anlage, beispielsweise eine (Meerwasser-)Entsalzungsanlage, eine Kohledioxidabscheidungsanlage, ein Chemiepark u. ä., an die Wärmekraftmaschine angrenzt oder die Wärmekraftmaschine in die (groß-)technische Anlage integriert ist.

Durch die Erfindung lässt sich so auch für Wärmekraftmaschinen, wie beispielsweise eine Gasturbine(-nanlage), bei denen ein Gesamtwirkungsgrad bzw. Brennstoffnutzungsgrad bereits durch Nutzung der Prozessgasabwärme der Wärmekraftmaschine für andere Prozesse optimiert wird bzw. ist, z.B. GuD Kraftwerk oder Heizkraftwerk, eine weitere Steigerung der Nutzung von bisher unberücksichtigten Wärmequellen erzielen.

So existieren bereits Anwendungen von Wärmekraftmaschinen, beispielsweise Gasturbinen bzw. GuD-Anlagen, bei denen die im Prozessabgas enthaltene Abwärme zur Versorgung eines sekundären (hier im Falle der Gasturbine) bzw. eines tertiären Prozesses (hier im Falle der GuD-Anlage) genutzt wird.

Hier kann erfindungsgemäß die Gasturbine bzw. die GuD-Anlage weiter so ausgestaltet/ausgelegt werden, dass deren Gehäuseabluft für eine ökonomische und/oder ökologische Wärmezufuhr einer nachgeschalteten (Meerwasser-)Entsalzungsanlage, einer Kohlendioxidabscheidungsanlage oder bestimmter Wärmeströme eines Chemieparks erfolgt.

Damit erreicht die Erfindung eine weitgehende Verbesserung der ökonomischen und ökologischen Effizienz der Wärmekraftmaschine sowie von (groß-)technischer Anlagen bzw. Verbundsystemen.

Nach einer bevorzugten Weiterbildung ist die Wärmekraftmaschine eine Verbrennungskraftmaschine, insbesondere eine Gasturbine(-nanlage) oder ein Verbrennungsmotor. Gerade bei großen Gasturbinen fallen beim Betrieb innerhalb dortiger Gehäuse bzw. Einhausungen, insbesondere dortiger Schallschutz- und/oder Explosionseinhausungen, große Wärmemengen an.

Da die Gehäuseabluft der Wärmekraftmaschine, wie die von Gasturbinen, leistungsabhängig ist - und vor allem in dem unmittelbar an den Start der Wärmekraftmaschine bzw. Gasturbine angrenzenden Zeitraum nur in begrenztem Umfang zur Verfügung stehen kann - , kann auch bevorzugt vorgesehen sein, für den Anfahrvorgang der Wärmekraftmaschine geeignete Ersatzwärmequellen bereitzustellen bzw. adäquate Regelungskonzepte zur Modulation der Wärmemenge vorzuhalten.

Bei einer weiteren bevorzugten Weiterbildung ist das Gehäuse eine solche Schallschutzeinhausung und/oder eine solche Explosionseinhausung bei der Wärmekraftmaschine.

Nach einer anderen bevorzugten Weiterbildung weist die technische Anlage ein Wärmeverbundsystem auf, wobei der Stoffstrom ein in dem Wärmeverbundsystem auftretender Stoffstrom ist. Kurz und vereinfacht ausgedrückt, die bzw. der Gehäuseabluft(-wärmestrom) wird mit dem externen Wärmeverbundsystem zur Auf- bzw. Vorheizung dortiger Stoffströme verschaltet.

Die Übertragung der thermischen Energie kann dabei durch eine direkte wie auch durch eine indirekte Wärmeübertragung - mittels geeigneter Wärmeübertrager, beispielsweise Rekuperatoren oder auch Regeneratoren, erfolgen.

Durch diese - direkte oder indirekte - Verschaltung der Gehäuseabluft bzw. des Gehäuseabluftwärmestroms mit einer externen Wärmesenke kann eine Minimierung eines Gesamtenergiebedarfs erfolgen. Somit steigt der Brennstoffnutzungsgrad der aus der Wärmekraftmaschine, wie der Gasturbine bzw. der GuD-Anlage, und der technischen Anlage, wie des Sekundär- bzw. Tertiärprozesses, bestehenden Gesamtanlage.

Die Verschaltung der Gehäuseabluft mit der externen Wärmesenke bzw. dem externen Wärmeverbundsystem kann dabei optimiert nach einer Pinch-Methode erfolgen, so dass die zu- und abzuführende Wärmemenge des Gesamtsystems minimiert - und dadurch - bei hohem Gesamtwirkungsgrad - ein hoch ökonomisch und/oder ökologisch effizienter Betrieb des Systems erreicht wird.

Anders ausgedrückt, nach einer besonders bevorzugten Weiterbildung erfolgt die Übertragung der thermischen Energie in ein Wärmeverbundsystem, beispielsweise eines Chemieparks, unter einer Analyse aller in dem Wärmeverbundsystem auftretenden Wärmeströme, insbesondere nach einer Pinch-Methode.

Bei einer weiteren besonders bevorzugten Weiterbildung ist die technische Anlage eine Entsalzungsanlage, insbesondere eine Meerwasserentsalzungsanlage oder eine Entsalzungsanlage bei einer Dampfturbine, eine Gasturbine oder eine Kohlendioxidabscheidungsanlage, ein Chemiepark, ein Blockheizkraftwerk mit einem Kolbenmotor, ein Gebläse oder eine Ventilationsvorrichtung oder eine Hallenheizung.

Vereinfacht ausgedrückt, besonders bevorzugt kann insbesondere die von einer Schall- bzw. Explosionsschutzeinhausung abgeführte Wärmemenge für den Fall der Verschaltung mit einer Meerwasserentsalzung basierend z. B. auf dem Prinzip einer Entspannungsverdampfung zur (Teil-)Vorwärmung des zu entsalzenden Wassers eingesetzt werden.

Eine weitere Verschaltungsmöglichkeit ist auch mit den Entsalzungsanlagen möglich, die häufig zur Versorgung eines kraftwerksinternen Wasser-Dampfkreislaufs mit demineralisiertem Wasser eingesetzt werden. Diese basieren oft auf dem Prinzip des Ionenaustauschs.

Eine mögliche Verschaltung bietet sich hierbei zur Vorwärmung des in die Anlage einströmenden Wassers bzw. zur Vorwärmung des im Regenerationszyklus eingesetzten Spülwassers und/oder zur Temperierung der Speicherbecken für das gereinigte Wasser an.

Ein weiterer thermisch verschalteter externer Prozess kann auch ein bereits bestehendes oder neu zu errichtendes, auf einem Kolbenmotor basierendes Blockheizkraftwerk sein. Hier bietet sich die Verschaltung zur Vorwärmung der häufig flüssigen Kraftstoffversorgung an.

Der verschaltete externe Prozess kann auch eine weitere Wärmekraftmaschine, insbesondere weitere Gasturbine sein, für die durch die Gehäuseabwärme eine Brennstoffvorwärmung erfolgen kann.

Die Gehäuseabwärme kann auch dazu eingesetzt werden, um bei Verwendung von Flüssiggas zur Verbrennung in einer Gasturbine die häufig notwendige Verdampfung vor der Verbrennung zu realisieren. Dabei kann die Gehäuseabwärme die einzusetzende Wärmemenge ganz oder teilweise zur Verfügung stellen.

Eine weitere Nutzungsmöglichkeit der Gehäuseabwärme kann auch darin bestehen, die Ansaugluft einer weiteren Wärmekraftmaschine, wie einer weiteren Gasturbine, durch direkte Zugabe der Gehäuseabluft bzw. der Abluft aus der Schall- bzw. Explosionsschutzeinhausung zu erwärmen. Hierdurch können Vereisungserscheinungen reduziert werden. Auch kann dies zu einer Betriebsbereichserweiterung der weiteren Wärmekraftmaschine bzw. weiteren Gasturbine führen.

Dies hat - im Gegensatz zur Nutzung der Gehäuseabluft zur Vorwärmung der eigenen Ansaugluft, d. h. der Ansaugluft der Wärmekraftmaschine - den Vorteil, dass die Ansaugluft der weiteren Wärmekraftmaschine bzw. weiteren Gasturbine direkt bei Maschinenstart erfolgen kann, ohne dass dafür eine separate Vorwärmung für das Anfahren der weiteren Wärmekraftmaschine bereitgestellt werden muss.

Dieser Vorteil wird auch realisiert, wenn die Vorheizung des Brenngasstroms der weiteren Gasturbine zumindest teilweise durch die Gehäuseabluft der Wärmekraftmaschine erfolgt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Insbesondere sind diese Merkmale jeweils einzeln und in beliebiger geeigneter Kombination mit dem erfindungsgemäßen Gasturbinenkraftwerk und/oder mit dem erfindungsgemäßen Verfahren zum Betreiben eines Gasturbinenkraftwerks des jeweiligen unabhängigen Anspruchs kombinierbar.

In Figuren sind Ausführungsbeispiele der Erfindung dargestellt, welche im Weiteren näher erläutert werden.

Es zeigen:
- FIG 1: eine Skizze einer Verschaltung von Wärme- bzw. Stoffströmen für die Nutzung einer Gehäuseabluft bei einer Gasturbine gemäß einem Ausführungsbeispiel,
- FIG 2: einer Verschaltung von Wärme- bzw. Stoffströmen für die Nutzung einer Gehäuseabluft bei einer Gasturbine gemäß einem weiteren Ausführungsbeispiel.

Ausführungsbeispiel: Aufheizung von Maschinenhallenzuluft (und Gehäusespülluft) durch Gehäuseabluft einer Gasturbine

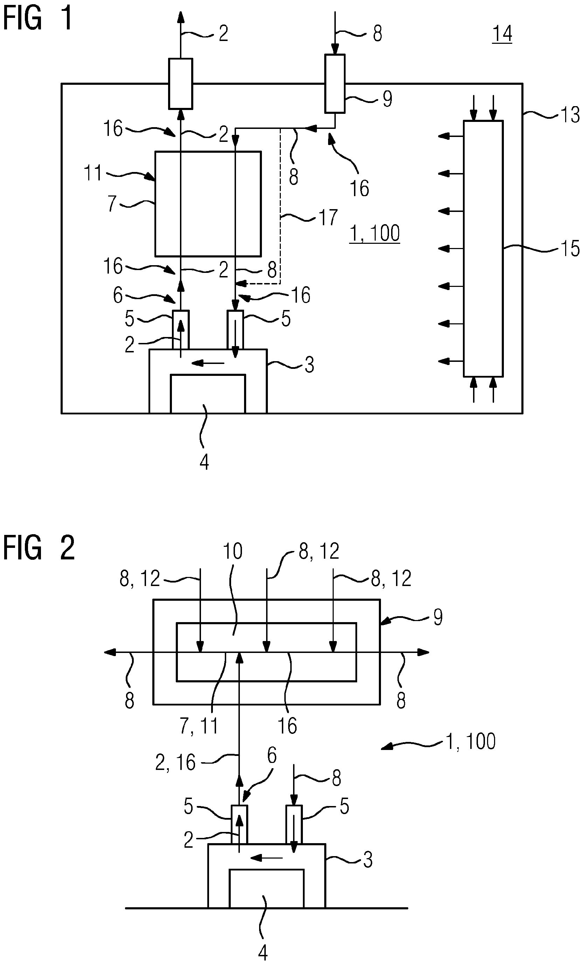

FIG 1 zeigt eine Verschaltung von Wärme- bzw. Stoffströmen für die Nutzung einer Gehäuseabluft bei einer in einer Maschinenhalle 13 betriebenen Gasturbine 4.

Für den Betrieb der Gasturbine 4 ist eine Mindesthallentemperatur in der Maschinenhalle 13 erforderlich, beispielsweise +5 °C.

Speziell in Gegenden mit tiefen (Hallen-)Außentemperaturen, beispielsweise -40 °C, ist, insbesondere wenn diese Umgebungsluft in die Maschinenhalle 13 angesaugt wird, eine hohe Wärmeleistung notwendig, um - mittels einer entsprechenden, die Hallenluft erwärmenden Hallenheizung 15 - die geforderte Mindesthallentemperatur zu erreichen bzw. diese für den Betrieb der Gasturbine 4 aufrechtzuerhalten.

Die Gasturbine 4 ist innerhalb einer Schall- bzw. Explosionsschutzeinhausung 3 angeordnet.

Die Schall- bzw. Explosionsschutzeinhausung 3 der Gasturbine 4 wird zum Abführen einer Gasturbinen-Abwärme, z. B. 400kW, und zum Abführen ggf. vorhandener gefährlicher Gase mit einem großen Luftmassenstrom, z. B. 20kg/s, - mittels einer entsprechenden Spülvorrichtung, hier beispielsweise eine Ventilationsvorrichtung 5, - gespült.

Diese (Spül-)Luft 8 wurde nach bisheriger Verfahrensweise durch die Ventilationsvorrichtung 5 unmittelbar aus der Maschinenhalle 13 in die Schalleinhausung 3 der Gasturbine 4 gezogen und danach über entsprechende Abführrohre 16 in die Umgebung 14 der Maschinenhalle 13 entlassen.

Das führte bisher dazu, dass ein entsprechend großer, kalter Luftmassenstrom - mittels eines Gebläses 9 - ständig aus der Umgebung 14 in die Maschinenhalle 13 gezogen und dabei von Umgebungstemperatur auf die geforderte Mindesthallentemperatur gebracht werden musste.

Diese Erwärmung der aus der Hallenumgebung 14 gezogenen kalten Umgebungsluft auf Mindesthallentemperatur musste im Vollen von der Hallenheizung 15 erbracht werden.

Um hier Heizleistung der Heizung 15 zu sparen, wird, wie FIG 1 zeigt, nun die warme Gehäuseabluft 2 aus der Schalleinhausung 3 der Gasturbine 4 entgegen der kalten (Gebläse-)Zuluft 8 der Maschinenhalle 13 in einen Wärmetauscher 7 geführt, bevor sie dann in die Umgebung 14 entlassen wird.

Die kalte (Gebläse-)Zuluft 8 wird dabei durch Erwärmung durch die warme Gehäuseabluft 2 aufgewärmt und anschließend zur Spülung mittels der Ventilationsvorrichtung 5 in das Gehäuse 3 der Gasturbine 4 gezogen.

Die erforderliche Mindesthallentemperatur kann dabei über einen weiten Außentemperaturbereich ohne zusätzliche Heizung gehalten werden kann. Wenn die Halle 13 zu warm wird, wird der Wärmetauscher 7 mittels eines Bypasses 17 teilweise umgangen. Wenn die Halle 13 zu kalt wird, wird durch die Heizung 15 nachgeheizt.

Dadurch kann gerade bei tiefen Umgebungstemperaturen eine große Menge an Heizleistung, beispielsweise ca. 900kW bei im Vorigen beschriebenen Temperaturbedingungen, eingespart werden.

Da der Wärmetauscher 7 und die zusätzlichen Strömungskanäle den Strömungswiderstand erhöhen, wird die Ventilation 5 der Schalleinhausung 3 mehr Antriebsleistung benötigen. Gleiches gilt für das Gebläse 9, das die kalte Zuluft 8 aus der Umgebung 14 durch den Wärmetauscher 7 zieht.

Diese benötigte Mehrleistung liegt aber unterhalb der gesparten Heizleistung, so dass die Energiebilanz der Anlage gegenüber der bisherigen Verfahrensweise verbessert wird.

Ausführungsbeispiel: Einspeisung von Gehäuseabluft einer Gasturbine in ein Wärmeverbundsystem bei einem Chemiepark

FIG 2 zeigt eine Verschaltung von Wärme- bzw. Stoffströmen für die Nutzung einer Gehäuseabluft 2 für ein Wärmeverbundsystem 10 bei einem Chemiepark 9.

Gleiche Komponenten bei den Figuren 1 und 2 weisen gleiche Bezugszeichen auf.

Wie FIG 2 zeigt ist hier die Gehäuseabluft 2 mit einem externen Wärmeverbundsystem 10 zur Auf- bzw. Vorheizung dortiger Stoffströme 8 bzw. Wärmesenke 12 verschaltet.

Die Übertragung 11 der thermischen Energie erfolgt wie FIG 2 weiter zeigt mittels direkter Einspeisung der Gehäuseabluft 2 in das Wärmeverbundsystem 10 des Chemieparks 9 über das Rohrleitungssystem 16.

Die Verschaltung der Gehäuseabluft 2 mit dem externen Wärmeverbundsystem 10 erfolgt optimiert nach einer Pinch-Methode. D. h., die zu- und abzuführende Wärmemenge des Gesamtsystems aus Chemiepark 9 und Gasturbine 4 wird minimiert - und dadurch - bei hohem Gesamtwirkungsgrad - ein hoch ökonomisch und/oder ökologisch effizienter Betrieb des Gesamtsystems bzw. des Chemieparks 9 erreicht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (1) zur Nutzung von Gehäuseabluft (2) aus einem Gehäuse (3) einer Wärmekraftmaschine (4), mit einem eine Wärmekraftmaschine (4) einhausenden Gehäuse (3) sowie einer Abführvorrichtung (5) zur Abführung (6) von in dem Gehäuse (3) befindlicher Gehäuseabluft (2)
gekennzeichnet
mit einem Mittel (7) zur Übertragung (11) von thermischer Energie der aus dem Gehäuse (3) abgeführten Gehäuseabluft (2) auf einen Stoffstrom (8) einer technischen Anlage (9).

2. Anordnung (1) zur Nutzung von Gehäuseabluft (2) aus einem Gehäuse (3) einer Wärmekraftmaschine (4) nach Anspruch 1, **dadurch gekennzeichnet, dass** die Wärmekraftmaschine (4) eine Verbrennungskraftmaschine, insbesondere eine Gasturbine oder ein Verbrennungsmotor, ist.

3. Anordnung (1) zur Nutzung von Gehäuseabluft (2) aus einem Gehäuse (3) einer Wärmekraftmaschine (4) nach mindestens einem der voranstehenden Ansprüche,
**dadurch gekennzeichnet, dass** das Gehäuse (3) eine Schallschutzeinhausung und/oder eine Explosionseinhausung der Wärmekraftmaschine ist.

4. Anordnung (1) zur Nutzung von Gehäuseabluft (2) aus einem Gehäuse (3) einer Wärmekraftmaschine (4) nach mindestens einem der voranstehenden Ansprüche,
**dadurch gekennzeichnet, dass** der Stoffstrom (8) ein in einem Wärmeverbundsystem (10) auftretender Stoffstrom (8) ist.

5. Anordnung (1) zur Nutzung von Gehäuseabluft (2) aus einem Gehäuse (3) einer Wärmekraftmaschine (4) nach mindestens einem der voranstehenden Ansprüche,
**dadurch gekennzeichnet, dass** der Stoffstrom (8) ein Fluidstrom, insbesondere ein Gasstrom oder ein Flüssigkeitsstrom, ist.

6. Anordnung (1) zur Nutzung von Gehäuseabluft (2) aus einem Gehäuse (3) einer Wärmekraftmaschine (4) nach mindestens einem der voranstehenden Ansprüche,
**dadurch gekennzeichnet, dass** der Stoffstrom (8) der technischen Anlage (9) ein Stoffstrom bei einer Entsalzungsanlage, insbesondere bei einer Meerwasserentsalzungsanlage oder bei einer Entsalzungsanlage einer Dampfturbine, bei einer Gasturbine oder bei einer Kohlendioxidabscheidungsanlage, bei einem Chemiepark, bei einem Blockheizkraftwerk mit einem Kolbenmotor oder bei einer Hallenheizung ist.

7. Anordnung (1) zur Nutzung von Gehäuseabluft (2) aus einem Gehäuse (3) einer Wärmekraftmaschine (4) nach mindestens einem der voranstehenden Ansprüche,
**dadurch gekennzeichnet, dass** das Mittel (7) zur Übertragung von thermischer Energie ein Wärmetauscher, insbesondere ein Wärmetauscher für einen direkten Wärme- und Stoffübergang, ein Rekuperator oder ein Regenerator, ist.

8. Verfahren (100) zur Nutzung von Gehäuseabluft (2) aus einem Gehäuse (3) einer Wärmekraftmaschine (4), bei dem eine Gehäuseabluft (2) aus einem Gehäuse (3) einer Wärmekraftmaschine (4) abgeführt wird (6),
**dadurch gekennzeichnet, dass** eine in der abgeführten Gehäuseabluft (2) enthaltene thermische Energie auf einen Stoffstrom (8) einer technischen Anlage (9) übertragen wird (11).

9. Verfahren (100) zur Abluftnutzung von Gehäuseabluft aus einem Gehäuse einer Wärmekraftmaschine nach mindestens einem der voranstehenden Ansprüche,
**dadurch gekennzeichnet, dass** die Übertragung (11) der thermischen Energie durch eine direkte (offene) Wärmeübertragung oder durch eine indirekte (geschlossene) Wärmeübertragung erfolgt.

10. Verfahren (100) zur Abluftnutzung von Gehäuseabluft aus einem Gehäuse einer Wärmekraftmaschine nach mindestens einem der voranstehenden Ansprüche,
**dadurch gekennzeichnet, dass** die Übertragung (11) der thermischen Energie in ein Wärmeverbundsystem (10) unter einer Analyse aller in dem Wärmeverbundsystem (10) auftretenden Wärmeströmen (8, 12), insbesondere nach einer Pinch-Methode, erfolgt.
